# EUROPEAN PATENT APPLICATION

(11) **EP 4 826 642 A1**
(43) Date of publication of application: **21.10.2026**
(21) Application number: 26169613.2
(22) Date of filing: 31.03.2026
(51) Int. Cl.: G06T 5/60, G06N 3/084

(54) **TRANSFER LEARNING-BASED MICROSCOPIC IMAGE DENOISING METHOD**

(30) Priority: 17.04.2025 CN 202510486906
(71) Applicant: Institute of Biophysics Chinese Academy of Sciences, Chaoyang District Beijing 100101 (CN)
(72) Inventor: Li, Dong, Beijing, 100101 (CN); Wang, Zongfa, Beijing, 100101 (CN)
(74) Representative: Petraz, Gilberto Luigi

(57) **Abstract**

The invention discloses a microscopic image denoising method based on transfer learning. The method comprises the following steps: constructing a basic denoising model by using an artificial neural network; a training step of training the basic denoising model: in the training step, training the basic denoising model in (1) a pre-training model mode or (2) a meta-learning model by using a training data set reflecting the biological structure microscopic image so as to obtain a training convergent basic denoising model; the method further comprises a fine tuning step of performing fine tuning on the basic denoising model subjected to training convergence, and in the fine tuning step, performing fine tuning on the training convergent basic denoising model by utilizing a fine tuning data set reflecting biological structure microscopic image data expected to be predicted so as to obtain a fine-tuning-converged denoising model; and deploying the fine-tuning-converged denoising model to predict biological structure microscopic image data reflecting expected prediction.

## Description

### FIELD

The present disclosure relates generally to denoising a microscopic image, and in particular to denoising a microscopic image using a convolutional neural network based on transfer learning.

### BACKGROUND

Since the Nobel Prize in Chemistry was awarded in 2014 for super-resolution microscopy, super-resolution microscopic imaging has become an indispensable and important tool in the field of life science research. Structured illumination microscopy (SIM) is regarded as the most suitable imaging tool for observing living cells and tissues because of its balanced imaging speed and resolution improvement. However, an SIM super-resolution reconstruction algorithm is easily affected by a photon noise in the raw data and produces reconstruction "artifacts". Especially for high-speed imaging or imaging of biological structures with low fluorescence expression, the reconstruction artifacts will greatly affect the quality of super-resolution imaging, and then affect subsequent life science research.

In recent years, with the rapid development of deep learning technology, an image denoising method based on a convolutional neural network has attracted more and more attention, and has achieved excellent results over traditional denoising methods. The traditional denoising methods, such as Wiener filtering, BM3D, etc., mainly use a statistical difference between image noise and sample information to suppress noise directionally. However, for the original fluorescence images with extremely low signal-to-noise ratio collected with low excitation light power and short exposure time in vivo imaging experiments, traditional algorithms may not effectively denoise such images because of deep coupling between the image noise and the sample information. Different from the traditional denoising methods, a denoising method based on deep learning uses a large number of "high signal-to-noise ratio-low signal-to-noise ratio" image pairs or low signal-to-noise ratio images collected in advance to iteratively train a neural network with "supervised", "weakly supervised" or "self-supervised" training mechanisms, and a converged neural network may denoise a microscopic image in an "end-to-end" manner.

However, due to the poor generalization of a deep convolutional neural network, a denoising neural network trained with specific biological sample data may effectively denoise only biological sample images with a similar morphology, and may not be generalized to a biological sample image with a larger morphological difference. Taking cell biology research as an example, there are usually dozens or even hundreds of subcellular structures with observational value. Existing methods must collect a large amount of training data (at least 30 different regions) for each form of biological structure, and train a dedicated neural network model for each structure. This process requires a lot of time and energy investment from experimenters (it usually takes several days to collect a single biological sample and training sets with different signal-to-noise ratios), and at the same time consumes a lot of fluorescent protein and computing resources (each network requires tens of hours of training time), which in turn causes huge experimental overhead. Moreover, due to the diversity of biological samples, photographed samples in different biological types, organs, tissues and cells are different and have different shapes. It is not feasible in practice to train a dedicated denoising neural network that corresponds to all biological samples one-to-one. In summary, although a deep neural network has excellent performance in a single biological sample denoising task, it is still difficult to be applied to a multi-biological sample denoising task.

### SUMMARY

In view of the above problems, the present disclosure proposes a transfer learning-based microscopic image denoising method, which enables researchers to train a denoising neural network with extremely low pre-training cost (or price), and by performing transfer learning on the trained network, a microscopic image denoising network suitable for any biological sample may be quickly fine-tuned in a short time (for example, several minutes), thereby enabling rapid and effective denoising of microscopic images of multiple biological samples.

According to an aspect of the present disclosure, a transfer learning-based microscopic image denoising method is provided, including:
building a basic denoising model by using an artificial neural network; and
a training step for training the basic denoising model, in which in the training step, the basic denoising model is trained in (1) a pre-training model mode or (2) a meta-learning model mode by using a training data set reflecting a microscopic image of a biological structure to obtain a training-converged basic denoising model; and
in which the method further includes:
   a fine-tuning step for fine-tuning the training-converged basic denoising model, in which in the fine-tuning step, the training convergent basic denoising model is fine-tuned by using a fine-tuning data set of microscopic image data of a biological structure reflecting an expected prediction to obtain a fine-tuning-converged denoising model; and
   deploying the fine-tuning-converged denoising model to make a prediction on the microscopic image data of the biological structure reflecting the desired prediction.

Optionally, a biological structure or a biological structure type to which the fine-tuning data set relates is different from a biological structure or a biological structure type to which the training data set relates.

Optionally, in the training step and the fine-tuning step of (1) the pre-training model mode, the training mode includes any one of a self-supervised training mode, a weakly supervised training mode or a supervised training mode; or
in the training step and the fine-tuning step of (2) the meta-learning model mode, the training mode includes any one of a self-supervised training mode, a weakly supervised training mode or a supervised training mode.

Optionally, the training data set or the fine-tuning data set is formed by scanning a biological sample with an optical imaging system to obtain original fluorescence images, and performing a super-resolution reconstruction on the original fluorescence image obtained to obtain super-resolution reconstructed images.

Optionally, for the supervised training mode, the optical imaging system collects two original fluorescence image sequences by using a high excitation light power and a low excitation light power respectively, and performs the super-resolution reconstruction on the two original fluorescence image sequences by using a super-resolution reconstruction algorithm to obtain a high signal-to-noise ratio super-resolution image sequence and a low signal-to-noise ratio super-resolution image sequence as the training data set or the fine-tuning data set.

Optionally, for the self-supervised training mode, the optical imaging system collects one original fluorescence image sequence by using a low excitation light power, and the original fluorescence image sequence is amplified to obtain an amplified super-resolution image sequence; and a structured illumination super-resolution reconstruction algorithm is used to perform the super-resolution reconstruction on the amplified super-resolution image sequence to obtain a super-resolution image sequence pair as the training data set or the fine-tuning data set.

Optionally, for the weakly supervised training mode, the optical imaging system respectively collects two original fluorescence image sequences by using low excitation light power, and performs the super-resolution reconstruction on the two original fluorescence image sequences by using a super-resolution reconstruction algorithm to obtain two low signal-to-noise ratio super-resolution image sequences as the training data set or the fine-tuning data set.

Optionally, an amount of image data collected by the optical imaging system for the fine-tuning step is smaller than an amount of image data collected by the optical imaging system for the training step.

Optionally, in the training step or the fine-tuning step of (1) the pre-training model mode or in the fine-tuning step of (2) the meta-model mode, the training data set or the fine-tuning data set consists of a super-resolution image pair consisting of the high signal-to-noise ratio super-resolution image sequence and the low signal-to-noise ratio super-resolution image sequence during a training period, and a group of super-resolution image pairs are randomly selected from the training set or the fine-tuning data set, in which a represents a batch size, and a low signal-to-noise ratio super-resolution image and a high signal-to-noise ratio super-resolution image in each group of super-resolution image pairs are respectively used as a neural network input image and a target image, an error between a network output and the target image is calculated and a gradient of the error is subjected to a back propagation, a network parameter is updated, a training is stopped after the loss between the network output and the target image is converged and the pre-training model network parameter or a meta-model network parameter is stored.

Optionally, in the training step or the fine-tuning step of (1) the pre-training model mode or in the fine-tuning step of (2) the meta-model mode, the training set or the fine-tuning data set consists of a super-resolution image sequence pair obtained by performing the super-resolution reconstruction on the amplified super-resolution image sequences during a training period, and a group of super-resolution image pairs are randomly selected from the training set or the fine-tuning data set, in which a represents a batch size, and a first super-resolution image and a second super-resolution image in each group of super-resolution image pairs are respectively used as a neural network input image and a target image, an error between a network output and the target image is calculated and a gradient of the error is subjected to back propagation, a network parameter is updated, a training is stopped after the loss between the network output and the target image is converged and the pre-training model network parameter or a meta-model network parameter is stored.

Optionally, in the training step or the fine-tuning step of (1) the pre-training model mode or in the fine-tuning step of (2) the meta-model mode, the training set or the fine-tuning data set consists of two low signal-to-noise ratio super-resolution image sequences during a training period, and a groups of super-resolution image pairs are randomly selected from the training set or the fine-tuning data set, in which a represents a batch training size, and a first super-resolution image and a second super-resolution image in each group of super-resolution image pairs are respectively used as a neural network input image and a target image, an error between a network output and the target image is calculated and a gradient of the error is subjected to a back propagation, a network parameter is updated, a training is stopped after a network input error is converged and the pre-training model network parameter or a meta-model network parameter is stored.

Optionally, in the training step of (2) the meta-model mode, the training data set consists of a super-resolution image pair consisting of the high signal-to-noise ratio super-resolution image sequence and the low signal-to-noise ratio super-resolution image sequence, and the training data set or the fine-tuning data set is divided into M task subsets, in which M is an integer greater than or equal to 2, each task subset consists of high and low signal-to-noise ratio super-resolution image pairs of a same biological structure, k task subsets are randomly selected from the M task subsets during a training period, in which k is an integer less than or equal to M, and b high and low signal-to-noise ratio super-resolution image pairs are selected from each task subset, in which b is an integer greater than or equal to 2, and in each task subset, b1 super-resolution image pairs are used as support data, b2 super-resolution image pairs are used as evaluation data, in which b1 and b2 are respectively integers smaller than b, and b2=b-b1;
n times of network training are repeated for each task subset in the k task subsets selected, in which n is an integer greater than or equal to 2, a low signal-to-noise ratio super-resolution image and a high signal-to-noise ratio super-resolution image in the b1 super-resolution image pairs used as support data are respectively used as a neural network input image and a target image, an error between the network output and the target image is calculated and a gradient of the error is subjected to a back propagation, and a network parameter is updated; and
b2 super-resolution image pairs used as the evaluation data are evaluated by a network after n times of updating to calculate the error between the network output and the target image, and losses of the k task subsets are averaged to be used as a total loss function of a current training period and a gradient of the total loss function is subjected to back propagation, a meta-model network parameter is updated, a training is stopped after the total loss is converged, and the meta-model network parameter is stored.

Optionally, in the training step of (2) the meta-model mode, the training data set consists of a super-resolution image sequence pair obtained by performing the super-resolution reconstruction on the amplified super-resolution image sequences (YK) and is divided into M task subsets, in which M is an integer greater than or equal to 2, each task subset consists of super-resolution image pairs of a same biological structure, k task subsets are randomly selected from the M task subsets during a training period, in which k is an integer less than or equal to M, and b super-resolution image pairs are selected from each task subset, in which b is an integer greater than or equal to 2, and in each task subset, b1 super-resolution image pairs are used as support data, b2 super-resolution image pairs are used as evaluation data, in which b1 and b2 are respectively integers smaller than b, and b2=b-b1;
n times of network training are repeated for each task subset in the k task subsets selected, in which n is an integer greater than or equal to 2, a first super-resolution image and a second super-resolution image in the b1 super-resolution image pairs used as support data are respectively used as a neural network input image and a target image, an error between a network output and the target image is calculated and a gradient of the error is subjected to back propagation, and a network parameter is updated; and
b2 super-resolution image pairs used as evaluation data are evaluated by a network after n times of updating to calculate the error between the network output and the target image, and losses of the k task subsets are averaged to be used as a total loss function of a current training period and a gradient of the total loss function is subjected to a back propagation, a meta-model network parameter is updated, a training is stopped after a total loss is converged, and the meta-model network parameter is stored.

Optionally, in the training step of (2) the meta-model mode, the training data set consists of the two low signal-to-noise ratio super-resolution image sequences (YR and XR) and is divided into M task subsets, in which M is an integer greater than or equal to 2, each task subset consists of super-resolution image pairs of a same biological structure, k task subsets are randomly selected from the M task subsets during a training period, in which k is an integer less than or equal to M, and b super-resolution image pairs are selected from each task subset, in which b is an integer greater than or equal to 2, and in each task subset, b1 super-resolution image pairs are used as support data, b2 super-resolution image pairs are used as evaluation data, in which b1 and b2 are respectively integers smaller than b, and b2=b-b1;
n times of network training are repeated for each task subset in the k task subsets selected, in which n is an integer greater than or equal to 2, a first super-resolution image and a second super-resolution image in the b1 super-resolution image pairs used as support data are respectively used as a neural network input image and a target image, an error between a network output and the target image is calculated and a gradient of the error is subjected to a back propagation, and a network parameter is updated; and
b2 super-resolution image pairs used as the evaluation data are evaluated by a network after n times of updating to calculate the error between the network output and the target image, and losses of the k task subsets are averaged to be used as a total loss function of a current training period and a gradient of the total loss function is subjected to a back propagation, a meta-model network parameter is updated, a training is stopped after a total loss is converged, and the meta-model network parameter is stored.

Optionally, the optical imaging system (100) includes a two-dimensional structured light system (2D-SIM), a three-dimensional structure illumination microscopy (3D-SIM), a lattice light sheet structure illumination microscopy (LLS-SIM), or a grazing incidence illumination structure illumination microscopy (GI-SIM).

Optionally, the artificial neural network includes a convolutional neural network, a deep neural network, or an attention mechanism-based neural network.

According to another aspect of the present disclosure, a computer program product including computer programs/instructions is provided, in which the computer programs/instructions, when executed by a processor, execute steps of the aforementioned method.

By adopting the technical means of the present disclosure, when a microscopic image of different biological structures is denoised, it is not necessary to collect a large amount of data to train a specific denoising neural network, and by performing transfer learning on the trained pre-training model or meta-model for denoising, the specific biological structure samples different from the previous training set may be effectively denoised, such that the retraining (or fine-tuning) of the denoising neural network may be completed with extremely low time and data cost, and the use cost of the denoising neural network may be greatly reduced. Therefore, the technology of the present disclosure is of great significance for improving the quality of a structure illumination super-resolution microscopic image and expanding the application of the denoising neural network in a structure illumination microscopy technology.

### BRIEF DESCRIPTION OF THE DRAWINGS

The principles and various aspects of the present disclosure will be more fully understood from the following detailed description taken in conjunction with the following drawings. It should be noted that the proportions of the drawings may vary for the purpose of clarity of illustration, but this does not affect the understanding of the present disclosure. In the drawings:
FIG. 1 schematically illustrates a basic block diagram of a structure illumination microscopy imaging system;
FIG. 2 schematically illustrates a basic principle of a training method of a denoising module according to embodiments of the present disclosure;
FIG. 3 schematically illustrates a schematic diagram of training a corresponding neural network of a denoising module to a desired pre-trained model;
FIG. 4 schematically illustrates a schematic diagram of training a corresponding neural network of a denoising module to a desired meta-model;
FIG. 5 schematically illustrates a schematic diagram of supervised fine-tuning corresponding to a pre-trained model manner;
FIG. 6 schematically illustrates a schematic diagram of self-supervised fine-tuning corresponding to a pre-trained model manner; and
FIG. 7 schematically illustrates a schematic diagram of image denoising by a redeployed denoising module after fine-tuning.

### DETAILED DESCRIPTION

In the drawings of the present disclosure, features that are structurally identical or functionally similar are denoted by the same reference numerals.

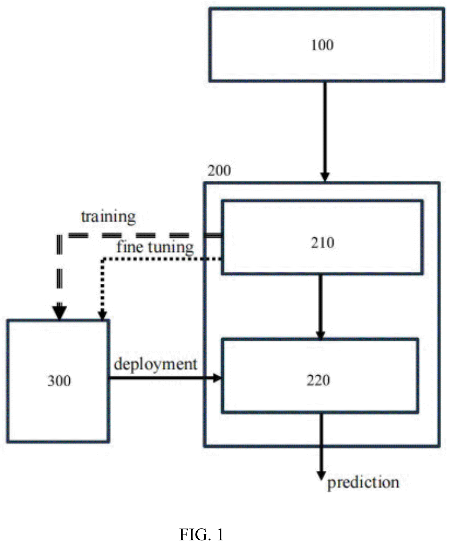

FIG. 1 schematically illustrates a basic block diagram of a structure illumination microscopy imaging system, which generally includes an optical imaging system 100 and a control and data processing system 200. The optical imaging system 100 includes an excitation optical path including an excitation objective through which an excitation beam may be emitted as a periodic fringe of structured light to excite fluorescence on a biological sample and other optical components for imaging, and a probe optical path including a probe objective and other optical components for imaging for receiving and detecting the excited fluorescence. It will be apparent to those skilled in the art that, depending on a configuration of the structure illumination microscopy imaging system, the excitation objective lens and the detection objective lens may be the same objective lens or different objectives. When a biological sample, in particular a living biological sample, is subjected to three-dimensional fluorescence microscopic imaging, a multilayer fluorescence image is continuously scanned and sampled along a direction of an optical axis of a detection objective lens, that is, along an axial direction, such that each scanning sampling is completed, the obtained multi-layer fluorescence images form a fluorescence image volume stack (which may also be referred to as a "sequence"). The optical imaging system 100 may include, but is not limited to, a two-dimensional structured light system (2D-SIM), a three-dimensional structured light system (3D-SIM), a lattice light-sheet structure illumination microscopy (LLS-SIM), and a grazing incidence illumination structured light system (GI-SIM).

The control and data processing system 200 mainly includes a computer and related components (such as a data memory, etc.), which may control an operation of the optical imaging system 100 and may receive image data from the optical imaging system 100 and perform corresponding post-processing. For example, the obtained fluorescence image stack is provided to the control and data processing system 200, and reconstructed into a three-dimensional microscopic image having a high signal-to-noise ratio after a series of data processing. For another example, a two-dimensional fluorescence image obtained by the optical imaging system 100 may also be processed by the control and data processing system 200 to obtain a two-dimensional fluorescence image having the high signal-to-noise ratio. For this purpose, the control and data processing system 200 may include a multi-modal structure illumination microscopy image reconstruction module or system. The multi-modal structure illumination microscopy image reconstruction module or system includes a super-resolution reconstruction module 210 and a denoising module 220. It should be noted that within the scope of the present disclosure, the modules and/or sub-modules described herein may be understood to include a data memory, such as a computer-readable storage medium, in which programs or sub-programs and denoising neural network models may be stored which are invoked and executed by a computer, in particular a computer of the control and data processing system 200. These programs or sub-programs and denoising neural network models, when invoked and executed by a computer, enable the methods/steps described below, in particular structured light microscopic image reconstruction and/or denoising methods/steps to be implemented. Specific programming methods for programs and/or subroutines are not discussed in the present disclosure, and those skilled in the art may implement related functions in any well-known programming software and/or commercially available software. Accordingly, in the following description of the operations or methods of related systems or modules, it should be understood that they may also be programmed to be invoked and executed by a computer.

Within the scope of the present disclosure, the super-resolution reconstruction module 210 may perform super-resolution reconstruction of fluorescence images obtained by the optical imaging system 100 using a standard (or any suitable currently known) structured light super-resolution reconstruction algorithm. Within the scope of the present disclosure, a standard structured light super-resolution reconstruction algorithm may be considered to be an algorithm already known in the field of microscopic imaging. As an example, the standard structured light super-resolution reconstruction algorithm may refer to the publication Three-dimensional resolution doubling in wide-field fluorescence microscopy by structured illumination. Biophys J 94, 4957-4970 (2008).

According to the present disclosure, the denoising module 220 is constructed using an artificial neural network, and the construction of the artificial neural network may be implemented in any manner familiar to those skilled in the art. In the context of the present disclosure, an artificial neural network architecture includes, but is not limited to, a convolutional neural network, a deep neural network, a Transformer, an attention mechanism-based neural network, and the like, such as a U-Net, a residual neural network model, a residual channel attention convolutional neural network model, or a Fourier channel attention convolutional neural network model, and the like. When training or fine-tuning the neural network, the related network model is trained or fine-tuned using a loss function including, but not limited to, mean square error (MSE), mean absolute error (MAE), structural similarity (SSIM), or a weighted summation thereof, and the like.

For example, according to embodiments of the present disclosure, before deploying the denoising module 220, an artificial neural network is used to build a basic denoising model. For example, the built basic denoising model may be temporarily stored in a pre-training module 300, and then the basic denoising model may be trained in the pre-training module 300 by using images of different biological structures that may be conveniently obtained in advance, after convergence, the converged basic denoising model may be fine-tuned by using and deploying the denoising module 220, and after convergence, the predicted biological structure image may be deployed as the denoising module 220 to achieve the purpose of rapidly and effectively denoising the microscopic image of multiple biological samples. The training or fine-tuning methods of the artificial neural network (basic denoising model) of the denoising module 220 mainly include two types: (1) a pre-training model mode; and (2) a meta-model mode. According to embodiments of the present disclosure, when performing a neural network training on the basic denoising model, a training set adopted may be composed of biological images having different morphologies and different signal-to-noise ratios. For example, the biological image may be an image obtained by the optical imaging system 100 and reconstructed by the super-resolution reconstruction module 210. The implementation of the training may be as needed. For example, the training mode may include a training mode known to those skilled in the art, such as a self-supervised training mode, a weakly supervised training mode, or a supervised training mode. In the self-supervised training mode, the training set may be derived from a single-collected fluorescence image having multiple biological forms and multiple signal-to-noise ratios obtained by the optical imaging system 100 and reconstructed by super resolution (for example, reconstructed by the super resolution reconstruction module 210). Within the scope of the present disclosure, the term "biological morphology" may be understood as a form of a biological sample to be tested with a specific biological or cellular structure worthy of observation. For example, biological or cellular structures may include, but are not limited to, microtubules, microfilaments, intermediate fibers, and the like. In the weakly supervised training mode, the training set may be derived from "low signal-to-noise ratio-low signal-to-noise ratio" image pairs having different biological forms repeatedly collected by the optical imaging system 100 and reconstructed by super resolution (for example, the super resolution reconstruction module 210 is used for super resolution reconstruction). In the supervised training mode, the training set may be derived from "low signal-to-noise ratio-high signal-to-noise ratio" image pairs having different biological forms repeatedly collected by the optical imaging system 100 and reconstructed by super resolution (for example, the super resolution reconstruction module 210 is used for super resolution reconstruction). It should be clear that the terms "low signal-to-noise ratio" and "high signal-to-noise ratio" relate to fluorescence image resolution of a biological sample obtained with a hardware system such as the optical imaging system 100, and generally, "low signal-to-noise ratio" means that the biological sample will be subjected to excitation light irradiation for a shorter time or excitation light irradiation of a lower power. Moreover, "high signal-to-noise ratio" means that the biological sample will be subjected to excitation light irradiation for a longer time or excitation light irradiation of a larger power, thereby causing the biological sample to be observed, especially the living biological sample, to be easily damaged.

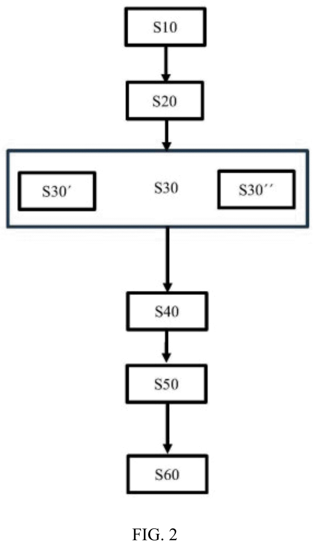

FIG. 2 schematically illustrates a basic principle of a training method of an artificial neural network to be deployed as a denoising module 220 according to embodiments of the present disclosure. As shown in FIG. 1, the training method may be completed separately in a pre-training module 300, and then a trained convolutional neural network is deployed as the denoising module 220. It will be apparent to those skilled in the art that, of the method steps or sub-steps described below, those related to computation may be encoded and stored in a form of a computer program and invoked and may be executed by a computer controlling a data processing system 200 when desired. For example, a computer program may be stored in a data store, such as a computer-readable storage medium, a cloud server, or the like, and may be invoked and executed via a corresponding computer interface or a network interface.

In step S10, a suitable convolutional neural network is selected to build a basic denoising model. In embodiments of the present disclosure, although a convolutional neural network is used to build the basic denoising model, it should be clear to those skilled in the art that other suitable artificial neural networks, such as an attention mechanism-based neural network, a Transformer, or a deep neural network, may also be used to build a basic denoising model and perform training, fine-tuning, and prediction using the technical means of the present disclosure. For example, an architecture of the convolutional neural network includes, but is not limited to, a U-Net, a residual neural network model, a residual channel attention convolutional neural network model, or a Fourier channel attention convolutional neural network model. When the network is trained or fine-tuned, a loss function includes, but is not limited to, mean square error (MSE), mean absolute error (MAE), structural similarity (SSIM), or a weighted summation thereof.

In step S20, data or a data set for training the basic denoising model (hereinafter referred to as "training data" or "a training data set") is provided. In an illustrative and non-limiting example, a biological sample may be first scanned with an optical imaging system 100 to obtain an original fluorescence image, and the original fluorescence image obtained may be reconstructed by using a super-resolution reconstruction module 210 to obtain a super-resolution reconstructed image as the training data or the data set.

For example, if the optical imaging system 100 is a two-dimensional structured light system, it completes fluorescence image scanning of the biological sample to obtain an original fluorescence image sequence Y, which may include a series of noisy fluorescence images yᵢ in different illumination modes, where i = 1, 2,..., S, S being an integer greater than or equal to 2 and representing a number of illumination modes of the optical imaging system 100. Here, each fluorescence image may be understood as a two-dimensional data matrix. If the training mode is a supervised training mode, the optical imaging system 100 may illuminate the biological sample by using a high excitation light power and a low excitation light power respectively, and collect two original fluorescence image sequences Y and X, in which each original fluorescence image sequence Y and X each includes a series of noisy fluorescence images yᵢ and xᵢ in different illumination modes, where i = 1, 2,..., S, S being an integer greater than or equal to 2 and representing the number of illumination modes of the optical imaging system 100. The two original fluorescence image sequences Y and X are then subjected to super-resolution reconstruction by using a structured light super-resolution reconstruction algorithm (e.g. by means of the super-resolution reconstruction module 210) to obtain a high signal-to-noise ratio super-resolution image sequence YR and a low signal-to-noise ratio super-resolution image sequence XR as the training data or the data set.

For another example, if the training mode is a self-supervised training mode, the optical imaging system 100 may illuminate the biological sample and collect an original fluorescence image sequence Y by using the low excitation light power, which may include a series of noisy fluorescence images yᵢ in different illumination modes, where i = 1, 2,..., S, in which S is an integer greater than or equal to 2 and represents the number of illumination modes of the optical imaging system 100. Then, the original fluorescence image sequence Y is amplified by using a pixel rearrangement technique (refer to patent publication CN116402681A of the inventor) or an image re-degradation technique (refer to patent publication CN116721017A of the inventor or refer to publication of Self-superior differentiation for structured micro-adaptation long-cell imaging, bioRxiv, 2023-04 by Chen, X., Qiao, C., Jiang, T., Liu, J., Meng, Q., Zeng, Y. & Wu, J., and publication of Zero-shot learning enables instant denoising and super-resolution in optical fluorescence microscopy. bioRxiv, 2023-04 by Qiao, C., Zeng, Y., Meng, Q., Chen, X., Chen, H., Jiang, T., ... & Dai, Q.) to obtain N amplified super-resolution image sequences YK, N being an integer greater than or equal to 2, in which each amplified super-resolution image sequence YK may include a series of noisy fluorescence images ykᵢ in different illumination modes, where i = 1, 2,..., S, S being an integer greater than or equal to 2 and representing the number of illumination modes of the optical imaging system 100. The N amplified super-resolution image sequences YK are then subjected to super-resolution reconstruction by using the structured light super-resolution reconstruction algorithm (e.g. by means of the super-resolution reconstruction module 210) to obtain a super-resolution image sequence pair as the training data or the data sets.

For another example, if the training mode is a weakly supervised training mode, the optical imaging system 100 may respectively illuminate the biological sample and collect two original fluorescence image sequences Y and X by using the low excitation light power, in which each original fluorescence image sequence Y and X each includes a series of noisy fluorescence images yᵢ and xᵢ in different illumination modes, where i = 1, 2,..., S, S being an integer greater than or equal to 2 and representing the number of illumination modes of the optical imaging system 100. The two original fluorescence image sequences Y and X are then subjected to the super-resolution reconstruction by using the structured light super-resolution reconstruction algorithm (e.g. by means of the super-resolution reconstruction module 210) to obtain two low signal-to-noise ratio super-resolution image sequences YR and XR as the training data or the data sets.

In step S30, the basic denoising model is trained using the training data or the data set obtained in step S20. As described above, a training mode for obtaining a converged basic denoising model may be (1) a pre-training model mode or (2) a meta-model mode. Therefore, it may be considered that step S30 is independently divided into two steps S30' and S30" based on the selection of the training mode. It should be understood that the selection of the training mode in step S30 may correspond to fine-tuning of the basic denoising model introduced later.

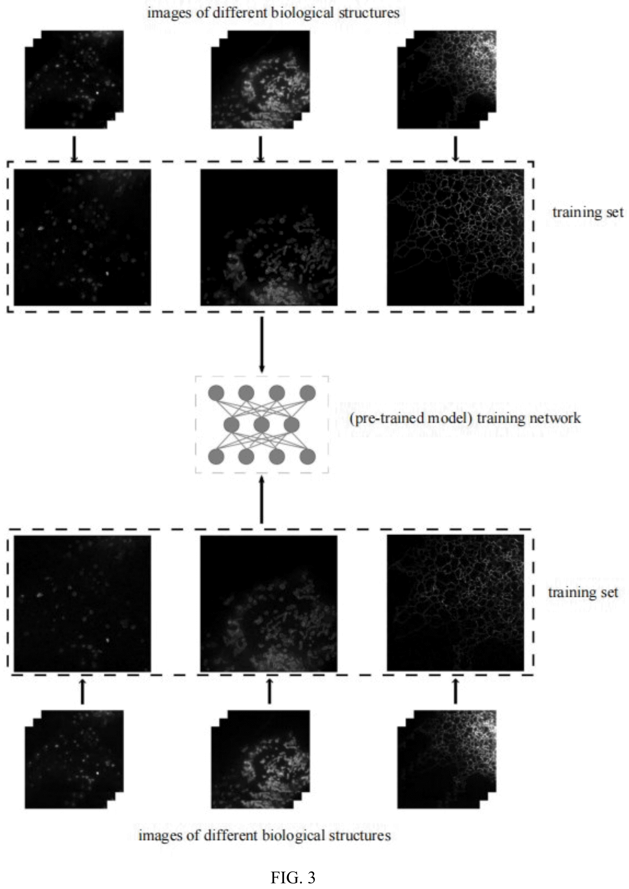

In step S30', the basic denoising model is trained by using the pre-training model mode, and the purpose is to train a corresponding convolutional neural network into a required pre-training model (as shown in FIG. 3), i.e., training convergent basic denoising model. Corresponding to the three training modes in step S20 (i.e. the self-supervised training mode, the weakly supervised training mode and the supervised training mode), the super-resolution image sequences or super-resolution images of different biological structures obtained in step S20 are integrated together as a large-scale training set or the training set. For example, in FIG. 3, the training data or training set may reflect microscopic images of biological structures such as lysosomes, mitochondrial outer membranes, endoplasmic reticulum, and the like having different signal-to-noise ratios. It will be apparent to those skilled in the art that the super-resolution image sequence or the super-resolution image obtained in step S20 should be an image sequence or image for at least two or more different biological structures.

For example, if the training mode adopts the supervised training mode, the large-scale training set will consist of a super-resolution image pair consisting of the high signal-to-noise ratio super-resolution image sequence YR and the low signal-to-noise ratio super-resolution image sequence XR during a training period for different biological structures obtained in step S20, such that a group (a batch training size) of super-resolution image pairs is randomly selected from the large-scale training set, and a low signal-to-noise ratio super-resolution image (such as xᵢ) and a high signal-to-noise ratio super-resolution image (such as yᵢ) in each group of super-resolution image pairs are respectively used as a neural network input image and a target image, an error between a network output and the target image is calculated and a gradient of the error is subjected to a back propagation, a network parameter is updated, a training is stopped after a network input error is converged and the pre-training model network parameter or a meta-model network parameter is stored.

For another example, in step S30', if the training mode adopts the self-supervised training mode, the large-scale training set will consist of the amplified super-resolution image sequences YK during a training period for different biological structures obtained in step S20, such that a group (the batch training size) of super-resolution image pairs may be randomly selected from any amplified super-resolution image pair among the amplified super-resolution image sequences YK, a first super-resolution image and a second super-resolution image in each group of super-resolution image pairs are respectively used as the neural network input image and the target image, the error between the network output and the target image is calculated and the gradient of the error is subjected to the back propagation, the network parameter is updated, the training is stopped after the network input error is converged and the pre-training model network parameter or the meta-model network parameter is stored.

For another example, in step S30', if the training mode adopts the weakly supervised training mode, the large-scale training set will consist of two low signal-to-noise ratio super-resolution image sequences YR and XR during a training period for different biological structures obtained in step S20, and a group (the batch training size) of super-resolution image pairs will be randomly selected from the low signal-to-noise ratio super-resolution image sequences YR and XR, the first super-resolution image and the second super-resolution image in each group of super-resolution image pairs are respectively used as the neural network input image and the target image, the error between the network output and the target image is calculated and the gradient of the error is subjected to the back propagation, the network parameter is updated, the training is stopped after the network input error is converged and the pre-training model network parameter or the meta-model network parameter is stored.

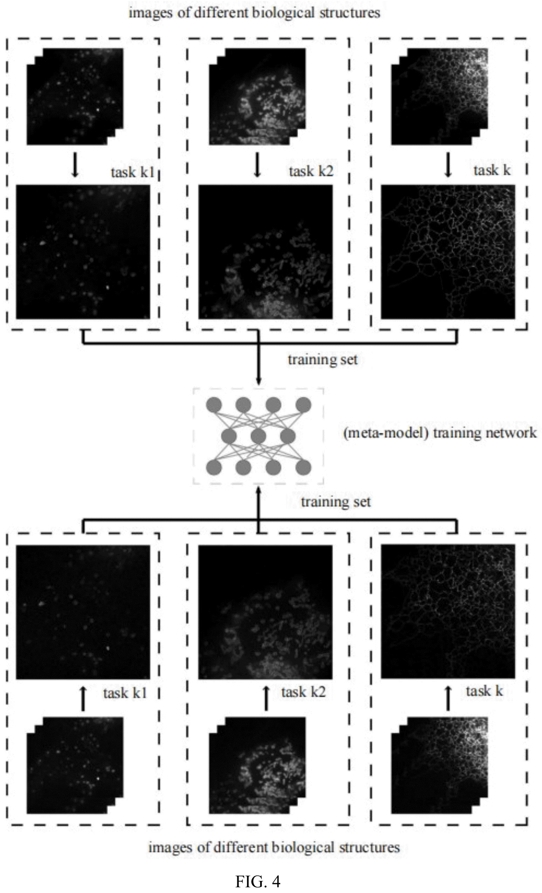

In step S30", the convolutional neural network (i.e., the basic denoising model) used to build the denoising module 220 is trained in the meta-model mode, and the purpose is to train the corresponding convolutional neural network into a required meta-model (as shown in FIG. 4), i.e., training convergent basic denoising model. It should be clear that a composition of the training sets in step S30" may be similar to a composition of the training sets in step S30' as described above. That is, for three different training modes (i.e., the self-supervised training mode, the weakly supervised training mode, and the supervised training mode), the training set respectively consists of the super-resolution image sequences or the super-resolution images of different biological structures obtained corresponding to the three training modes in step S30.

For example, if the training mode adopts the supervised training mode, the training set will consist of the super-resolution image pair consisting of the high signal-to-noise ratio super-resolution image sequence YR and the low signal-to-noise ratio super-resolution image sequence XR during a training period obtained in step S20, and the training set is first divided into M task subsets, in which M is an integer greater than or equal to 2, each task subset consists of high and low signal-to-noise ratio super-resolution image pairs of a same biological structure, k task subsets are randomly selected from the M task subsets during the training period, in which k is an integer less than or equal to M, and b high and low signal-to-noise ratio super-resolution image pairs are selected from each task subset, in which b is an integer greater than or equal to 2, and in each task subset, b1 super-resolution image pairs are used as support data, b2 super-resolution image pairs are used as evaluation data, in which b1 and b2 are respectively integers smaller than b, and b2=b-b1. Furthermore, for each task subset Jm (m is an integer and = 1,..., k) in the k task subsets selected, the low signal-to-noise ratio super-resolution image (e.g. xᵢ) and the high signal-to-noise ratio super-resolution image (e.g. yᵢ) in the b1 super-resolution image pairs used as support data are respectively used as the neural network input image and the target image, the error between the network output and the target image is calculated and the gradient of the error is subjected to the back propagation, and the network parameter is updated. This process is repeated n times (n is an integer greater than or equal to 2), and the b2 super-resolution image pairs used as the evaluation data are evaluated by a network after n times of updating to calculate the error between the network output and the target image. This error is called a loss_{Jm} of a Jm^{th} task subset. The losses Jm of all the selected k task subsets (m is an integer and = 1, ..., k) are obtained and are averaged to be used as a total loss function of a current training period, and the gradient of the total loss function is subjected to the back propagation, a meta-model network parameter is updated, a training is stopped after a total loss is converged, and the meta-model network parameter is stored.

For another example, if the training mode adopts the self-supervised training mode, the training set will consist of the amplified super-resolution image sequences YK during a training period obtained in step S20, and the training set is first divided into M task subsets, in which M is an integer greater than or equal to 2, each task subset consists of super-resolution image pairs of a same biological structure, k task subsets are randomly selected from the M task subsets during the training period, in which k is an integer less than or equal to M, and b super-resolution image pairs are selected from each task subset, in which b is an integer greater than or equal to 2, and in each task subset, b1 super-resolution image pairs are used as the support data, b2 super-resolution image pairs are used as the evaluation data, in which b1 and b2 are respectively integers smaller than b, and b2=b-b1. Furthermore, for each task subset Jm (m is an integer and = 1,..., k) in the k task subsets selected, the first super-resolution image and the second super-resolution image in the b1 super-resolution image pairs used as the support data are respectively used as the neural network input image and the target image, the error between the network output and the target image is calculated and the gradient of the error is subjected to the back propagation, and the network parameter is updated. This process is repeated n times (n is an integer greater than or equal to 2), and the b2 super-resolution image pairs used as the evaluation data are evaluated by the network after n times of updating to calculate the error between the network output and the target image. This error is called the loss_{Jm} of the Jm^{th} task subset. The losses Jm of all the selected k task subsets (m is an integer and = 1, ..., k) are obtained and are averaged to be used as the total loss function of the current training period, and the gradient of the total loss function is subjected to the back propagation, the meta-model network parameter is updated, the training is stopped after the total loss is converged, and the meta-model network parameter is stored.

For another example, if the training mode adopts the weakly supervised training mode, the training set will consist of two low signal-to-noise ratio super-resolution image sequences YR and XR during a training period obtained in step S20, and the training set is first divided into M task subsets, in which M is an integer greater than or equal to 2, each task subset consists of super-resolution image pairs of a same biological structure, k task subsets are randomly selected from the M task subsets during the training period, in which k is an integer less than or equal to M, and b super-resolution image pairs are selected from each task subset, in which b is an integer greater than or equal to 2, and in each task subset, b1 super-resolution image pairs are used as the support data, b2 super-resolution image pairs are used as the evaluation data, in which b1 and b2 are respectively integers smaller than b, and b2=b-b1. Furthermore, for each task subset Jm (m is an integer and = 1,..., k) in the k task subsets selected, the first super-resolution image and the second super-resolution image in the b1 super-resolution image pairs used as support data are respectively used as the neural network input image and the target image, the error between the network output and the target image is calculated and the gradient of the error is subjected to the back propagation, and the network parameter is updated. This process is repeated n times (n is an integer greater than or equal to 2), and the b2 super-resolution image pairs used as the evaluation data are evaluated by the network after n times of updating to calculate the error between the network output and the target image. This error is called the loss_{Jm} of the Jm^{th} task subset. The losses Jm of all the selected k task subsets (m is an integer and = 1, ..., k) are obtained and are averaged to be used as the total loss function of the current training period, and the gradient of the total loss function is subjected to the back propagation, the meta-model network parameter is updated, the training is stopped after the total loss is converged, and the meta-model network parameter is stored.

In step S40, for a biological structure to be observed (the biological structure is different from the biological structure involved in step S20 or may be the same or similar to the biological structure) or a biological structure type, the biological sample or the biological sample of the same type may be first scanned by the optical imaging system 100 to obtain an original fluorescence image, and the obtained original fluorescence image may be reconstructed by the super-resolution reconstruction module 210 to obtain the super-resolution reconstructed image as fine-tuning data or a fine-tuning data set. In the context of the present disclosure, the biological structure type may be understood as a general class for a specific biological structure (e.g. microfilaments, microtubules, intermediate fibers, etc.), such as micro filament-like biological structures, microtubule-like biological structures, intermediate fiber-like biological structures. Therefore, according to an embodiment of the present disclosure, for a certain type of biological structure to be observed, a specific biological structure corresponding to the biological structure may be imaged and reconstructed in step S40 to obtain the fine-tuning data or the fine-tuning data set.

In step S50, the basic denoising model obtained (training convergence) in step S30 is fine-tuned using the fine-tuning data or the fine-tuning data set obtained in step S40. Within the scope of the present disclosure, the term "fine-tuning" refers to retraining an already trained model or convolutional neural network through a small amount of data to obtain an updated module or convolutional neural network that reflects the specific characteristics of the small amount of data. In other words, the term "fine-tuning" may also be considered to be implemented using the same idea as a transfer learning in the field of neural network deep learning.

According to embodiments of the present disclosure, the amount of data of the fine tuning data or the data set obtained in step S40 may be smaller than or significantly smaller than the amount of data of the training data or the data set obtained in step S20.

Specifically, in step S40, the fluorescence images are obtained by the optical imaging system 100 for three different training modes (i.e., the supervised training mode, the weakly supervised training mode, and the self-supervised training mode) respectively, and then the super-resolution reconstruction is performed by the super-resolution reconstruction module 210 to obtain corresponding fine-tuning data or data set. For example, if the training mode is the supervised training mode, the optical imaging system 100 may collect two original fluorescence image sequences Y and X by using the high excitation light power and the low excitation light power respectively, in which each original fluorescence image sequence Y and X each includes a series of noisy fluorescence images yᵢ and xᵢ in different illumination modes, where i = 1, 2,..., S, S being an integer greater than or equal to 2 and representing the number of illumination modes of the optical imaging system 100. The two original fluorescence image sequences Y and X are then subjected to the super-resolution reconstruction by using the structured light super-resolution reconstruction algorithm (e.g. by means of the super-resolution reconstruction module 210) to obtain the high signal-to-noise ratio super-resolution image sequence YR and the low signal-to-noise ratio super-resolution image sequence XR as the training data or the data set.

For another example, if the training mode is a self-supervised training mode, the optical imaging system 100 may collect the original fluorescence image sequence Y by using the low excitation light power, which may include a series of noisy fluorescence images yᵢ in different illumination modes, where i = 1, 2,..., S, in which S is an integer greater than or equal to 2 and represents the number of illumination modes of the optical imaging system 100. Then, the original fluorescence image sequence Y is amplified by using a pixel rearrangement technique or an image re-degradation technique to obtain N amplified super-resolution image sequences YK, N being an integer greater than or equal to 2, in which each amplified super-resolution image sequence YK may include a series of noisy fluorescence images ykᵢ in different illumination modes, where i = 1, 2,..., S, S being an integer greater than or equal to 2 and representing the number of illumination modes of the optical imaging system 100. The N amplified super-resolution image sequences YK are then subjected to super-resolution reconstruction by using the structured light super-resolution reconstruction algorithm (e.g. by means of the super-resolution reconstruction module 210) to obtain the super-resolution image sequence pair as the training data or the data sets.

For another example, if the training mode is a weakly supervised training mode, the optical imaging system 100 may respectively collect two original fluorescence image sequences Y and X by using the low excitation light power, in which each original fluorescence image sequence Y and X each includes a series of noisy fluorescence images yᵢ and xᵢ in different illumination modes, where i = 1, 2,..., S, S being an integer greater than or equal to 2 and representing the number of illumination modes of the optical imaging system 100. The two original fluorescence image sequences Y and X are then subjected to the super-resolution reconstruction by using the structured light super-resolution reconstruction algorithm (e.g. by means of the super-resolution reconstruction module 210) to obtain two low signal-to-noise ratio super-resolution image sequences YR and XR as the training data or the data sets.

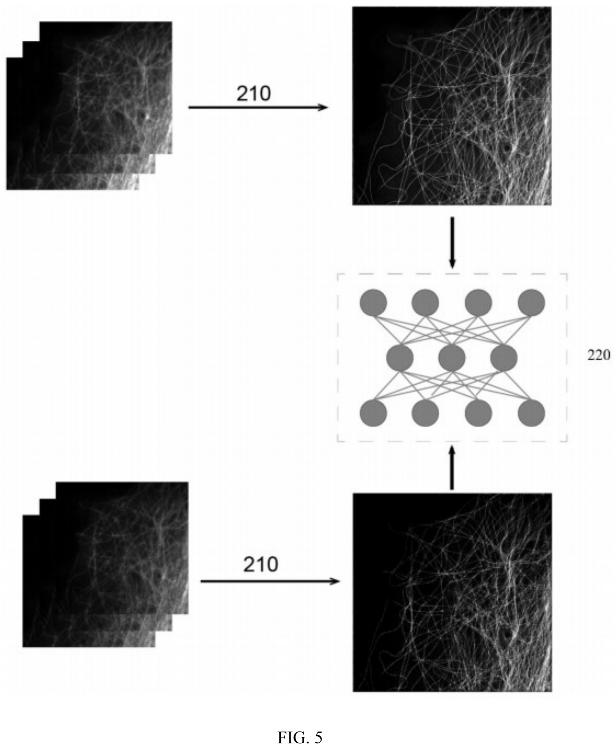

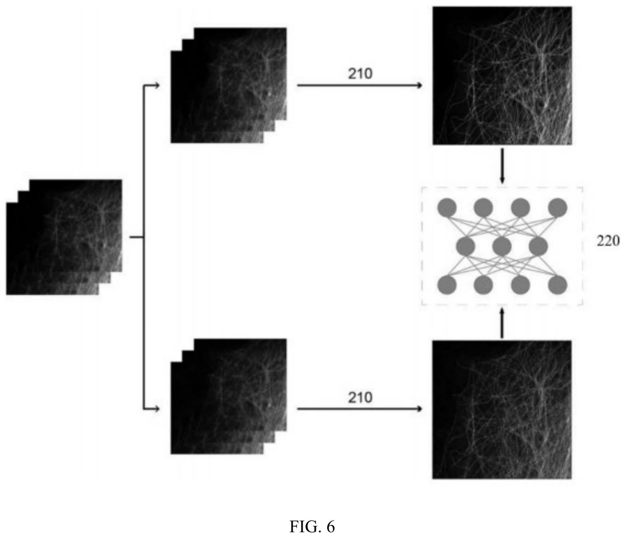

Then, in step S50, the meta-model or the pre-trained model is fine-tuned using the training data set obtained in step S40 to obtain a fine-tuning-converged denoising model. For example, as illustrated only in the supervised training mode (as shown in FIG. 5) as follows, other self-supervised (as shown in FIG. 6) or weakly supervised modes may be analoged accordingly. If the fine-tuning mode adopts the supervised training mode, the fine-tuning training set or the fine-tuning set consist of the super-resolution image pair consisting of the high signal-to-noise ratio super-resolution image sequence YR and the low signal-to-noise ratio super-resolution image sequence XR during a fine-tuning period obtained in step S40, such that a group of super-resolution image pairs (a represents a batch training size) are randomly selected from the fine-tuning set. The low signal-to-noise ratio super-resolution image (e.g. xᵢ) and the high signal-to-noise ratio super-resolution image (e.g. yᵢ) in each group of super-resolution image pairs are respectively used as an input image and a target image of a meta-model neural network or a pre-trained model neural network, the error between the network output and the target image is calculated and the gradient of the error is subjected to the back propagation, and the network parameter is updated. A fine-tuning is stopped after an error of a network input is converged, and the fine-tuned model network parameter is stored.

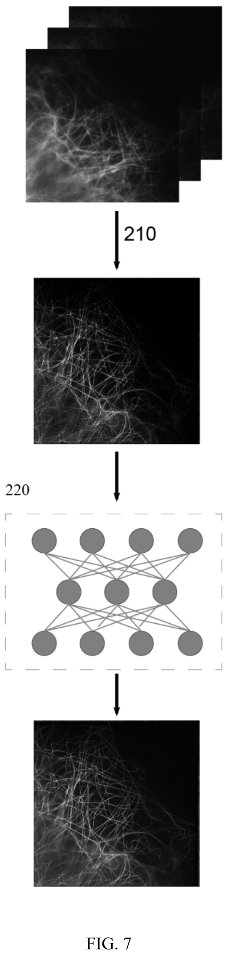

Next, in step S60, the fine-tuning-converged denoising model is deployed as the denoising module 220. By loading the denoising module 220, as shown in FIG. 7, the denoising module 220 may effectively denoise/predict the super-resolution image of a specific biological structure (the biological structure corresponding to steps S40 and S50), thereby outputting a denoised high signal-to-noise ratio super-resolution microscopic fluorescence image.

According to embodiments of the present disclosure, in step S30 (including step S30' and step S30") or step S50, if the training or fine-tuning mode adopts the self-supervised training mode, the super-resolution image data in the training set or fine-tuning set may also be label-free noise data. According to an embodiment of the present disclosure, in step S30 (including step S30' and step S30") and step S50, the training modes may be consistent or inconsistent with each other, and include any one of the self-supervised training mode, the weakly supervised training mode, or the supervised training mode.

According to embodiments of the present disclosure, if it is desired to predict (denoise) the images of different biological structures involved in the training and fine-tuning of steps S30 and S50, steps S40 and S50 may be repeated. That is, for the training convergent basic denoising model (step S30), the fine-tuning data or data set predicted by the images of the different biological structures (such as step S40) is reused in step S50 for fine-tuning, and after converged, the denoising module 220 is redeployed.

Although specific embodiments of the present disclosure have been described in detail herein, they are given for the purpose of explanation only, and should not be construed as limiting the scope of the present disclosure. Furthermore, it will be apparent to those skilled in the art that the various embodiments described in the present disclosure may be used in combination with each other. Various substitutions, alterations, and modifications are contemplated without departing from the spirit and scope of the present disclosure.

## Claims

1. A transfer learning-based microscopic image denoising method, comprising:
building a basic denoising model by using an artificial neural network; and a training step for training the basic denoising model, wherein in the training step, the basic denoising model is trained in (1) a pre-training model mode or (2) a meta-learning model mode by using a training data set reflecting a microscopic image of a biological structure to obtain a training convergent basic denoising model; and wherein the method further comprises: a fine-tuning step for fine-tuning the training convergent basic denoising model, wherein in the fine-tuning step, the training convergent basic denoising model is fine-tuned by using a fine-tuning data set of a microscopic image data of a biological structure reflecting a desired prediction to obtain a fine-tuning-converged denoising model; and deploying the fine-tuning-converged denoising model to make a prediction on the microscopic image data of the biological structure reflecting the desired prediction.

2. The method according to claim 1, wherein a biological structure or a biological structure type to which the fine-tuning data set relates is different from a biological structure or a biological structure type to which the training data set relates.

3. The method according to claim 1 or 2, wherein in the training step and the fine-tuning step of (1) the pre-training model mode, the training mode comprises any one of a self-supervised training mode, a weakly supervised training mode or a supervised training mode; or
in the training step and the fine-tuning step of (2) the meta-model mode, the training mode comprises any one of a self-supervised training mode, a weakly supervised training mode or a supervised training mode.

4. The method according to claim 3, wherein the training data set or the fine-tuning data set is formed by scanning a biological sample with an optical imaging system (100) to obtain an original fluorescence image, and performing a super-resolution reconstruction on the original fluorescence image obtained to obtain a super-resolution reconstructed image.

5. The method according to claim 4, wherein for the supervised training mode, the optical imaging system (100) collects two original fluorescence image sequences (Y and X) by using a high excitation light power and a low excitation light power respectively, and performs the super-resolution reconstruction on the two original fluorescence image sequences (Y and X) by using a super-resolution reconstruction algorithm to obtain a high signal-to-noise ratio super-resolution image sequence (YR) and a low signal-to-noise ratio super-resolution image sequence (XR) as the training data set or the fine-tuning data set.

6. The method according to claim 4, wherein for the self-supervised training mode, the optical imaging system (100) collects one original fluorescence image sequence (Y) by using a low excitation light power, and the original fluorescence image sequence (Y) is amplified to obtain an amplified super-resolution image sequence (YK); and a structured light super-resolution reconstruction algorithm is used to perform the super-resolution reconstruction on the amplified super-resolution image sequence (YK) to obtain a super-resolution image sequence pair as the training data set or the fine-tuning data set.

7. The method according to claim 4, wherein for the weakly supervised training mode, the optical imaging system (100) respectively collects two original fluorescence image sequences (Y and X) by using low excitation light power, and performs the super-resolution reconstruction on the two original fluorescence image sequences (Y and X) by using a super-resolution reconstruction algorithm to obtain two low signal-to-noise ratio super-resolution image sequences (YR and XR) as the training data set or the fine-tuning data set.

8. The method according to any one of claims 5 to 7, wherein an amount of image data collected by the optical imaging system (100) for the fine-tuning step is smaller than an amount of image data collected by the optical imaging system (100) for the training step.

9. The method according to claim 5, wherein in the training step or the fine-tuning step of (1) the pre-training model mode or in the fine-tuning step of (2) the meta-model mode, the training data set or the fine-tuning data set consists of a super-resolution image pair consisting of the high signal-to-noise ratio super-resolution image sequence (YR) and the low signal-to-noise ratio super-resolution image sequence (XR) during a training period, and a groups of super-resolution image pairs are randomly selected from the training set or the fine-tuning data set, wherein a represents a batch training size, and a low signal-to-noise ratio super-resolution image and a high signal-to-noise ratio super-resolution image in each group of super-resolution image pairs are respectively used as a neural network input image and a target image, an error between a network output and the target image is calculated and a gradient of the error is subjected to a back propagation, a network parameter is updated, a training is stopped after a network input error is converged and the pre-training model network parameter or a meta-model network parameter is stored.

10. The method according to claim 6, wherein in the training step or the fine-tuning step of (1) the pre-training model mode or in the fine-tuning step of (2) the meta-model mode, the training set or the fine-tuning data set consists of a super-resolution image sequence pair obtained by performing the super-resolution reconstruction on the amplified super-resolution image sequences (YK) during a training period, and a groups of super-resolution image pairs are randomly selected from the training set or the fine-tuning data set, wherein a represents a batch training size, and a first super-resolution image and a second super-resolution image in each group of super-resolution image pairs are respectively used as a neural network input image and a target image, an error between a network output and the target image is calculated and a gradient of the error is subjected to back propagation, a network parameter is updated, a training is stopped after a network input error is converged and the pre-training model network parameter or a meta-model network parameter is stored.

11. The method according to claim 7, wherein in the training step or the fine-tuning step of (1) the pre-training model mode or in the fine-tuning step of (2) the meta-model mode, the training set or the fine-tuning data set consists of two low signal-to-noise ratio super-resolution image sequences (YR and XR) during a training period, and a groups of super-resolution image pairs are randomly selected from the training set or the fine-tuning data set, wherein a represents a batch training size, and a first super-resolution image and a second super-resolution image in each group of super-resolution image pairs are respectively used as a neural network input image and a target image, an error between a network output and the target image is calculated and a gradient of the error is subjected to a back propagation, a network parameter is updated, a training is stopped after a network input error is converged and the pre-training model network parameter or a meta-model network parameter is stored.

12. The method according to claim 5, wherein in the training step of (2) the meta-model mode, the training data set consists of a super-resolution image pair consisting of the high signal-to-noise ratio super-resolution image sequence (YR) and the low signal-to-noise ratio super-resolution image sequence (XR), and the training data set or the fine-tuning data set is divided into M task subsets, wherein M is an integer greater than or equal to 2, each task subset consists of high and low signal-to-noise ratio super-resolution image pairs of a same biological structure, k task subsets are randomly selected from the M task subsets during a training period, wherein k is an integer less than or equal to M, and b high and low signal-to-noise ratio super-resolution image pairs are selected from each task subset, wherein b is an integer greater than or equal to 2, and in each task subset, b1 super-resolution image pairs are used as support data, b2 super-resolution image pairs are used as evaluation data, wherein b1 and b2 are respectively integers smaller than b, and b2=b-b1;
n times of network training are repeated for each task subset in the k task subsets selected, wherein n is an integer greater than or equal to 2, a low signal-to-noise ratio super-resolution image and a high signal-to-noise ratio super-resolution image in the b1 super-resolution image pairs used as support data are respectively used as a neural network input image and a target image, an error between a network output and the target image is calculated and a gradient of the error is subjected to a back propagation, and a network parameter is updated; and b2 super-resolution image pairs used as the evaluation data are evaluated by a network after n times of updating to calculate the error between the network output and the target image, and losses of the k task subsets are averaged to be used as a total loss function of a current training period and a gradient of the total loss function is subjected to back propagation, a meta-model network parameter is updated, a training is stopped after a total loss is converged, and the meta-model network parameter is stored.

13. The method according to claim 6, wherein in the training step of (2) the meta-model mode, the training data set consists of a super-resolution image sequence pair obtained by performing the super-resolution reconstruction on the amplified super-resolution image sequences (YK) and is divided into M task subsets, wherein M is an integer greater than or equal to 2, each task subset consists of super-resolution image pairs of a same biological structure, k task subsets are randomly selected from the M task subsets during a training period, wherein k is an integer less than or equal to M, and b super-resolution image pairs are selected from each task subset, wherein b is an integer greater than or equal to 2, and in each task subset, b1 super-resolution image pairs are used as support data, b2 super-resolution image pairs are used as evaluation data, wherein b1 and b2 are respectively integers smaller than b, and b2=b-b1;
n times of network training are repeated for each task subset in the k task subsets selected, wherein n is an integer greater than or equal to 2, a first super-resolution image and a second super-resolution image in the b1 super-resolution image pairs used as support data are respectively used as a neural network input image and a target image, an error between a network output and the target image is calculated and a gradient of the error is subjected to back propagation, and a network parameter is updated; and b2 super-resolution image pairs used as evaluation data are evaluated by a network after n times of updating to calculate the error between the network output and the target image, and losses of the k task subsets are averaged to be used as a total loss function of a current training period and a gradient of the total loss function is subjected to a back propagation, a meta-model network parameter is updated, a training is stopped after a total loss is converged, and the meta-model network parameter is stored.

14. The method according to claim 7, wherein in the training step of (2) the meta-model mode, the training data set consists of the two low signal-to-noise ratio super-resolution image sequences (YR and XR) and is divided into M task subsets, wherein M is an integer greater than or equal to 2, each task subset consists of super-resolution image pairs of a same biological structure, k task subsets are randomly selected from the M task subsets during a training period, wherein k is an integer less than or equal to M, and b super-resolution image pairs are selected from each task subset, wherein b is an integer greater than or equal to 2, and in each task subset, b1 super-resolution image pairs are used as support data, b2 super-resolution image pairs are used as evaluation data, wherein b1 and b2 are respectively integers smaller than b, and b2=b-b 1;
n times of network training are repeated for each task subset in the k task subsets selected, wherein n is an integer greater than or equal to 2, a first super-resolution image and a second super-resolution image in the b1 super-resolution image pairs used as support data are respectively used as a neural network input image and a target image, an error between a network output and the target image is calculated and a gradient of the error is subjected to a back propagation, and a network parameter is updated; and b2 super-resolution image pairs used as the evaluation data are evaluated by a network after n times of updating to calculate the error between the network output and the target image, and losses of the k task subsets are averaged to be used as a total loss function of a current training period and a gradient of the total loss function is subjected to a back propagation, a meta-model network parameter is updated, a training is stopped after a total loss is converged, and the meta-model network parameter is stored.

15. The method according to any one of claims 4 to 14, wherein the optical imaging system (100) comprises a two-dimensional structured light system (2D-SIM), a three-dimensional structured light system (3D-SIM), a lattice light sheet structured light system (LLS-SIM), or a grazing incidence illumination structured light system (GI-SIM);
wherein the artificial neural network comprises a convolutional neural network, a deep neural network, or an attention mechanism-based neural network.
